# EUROPEAN PATENT APPLICATION

(11) **EP 4 687 113 A1**
(43) Date of publication of application: **04.02.2026**
(21) Application number: 25190652.5
(22) Date of filing: 21.07.2025
(51) Int. Cl.: G06V 10/56, G06N 3/0455, G06N 3/045, G06N 3/047, G06N 3/096, G06N 3/08, G06T 5/50, G06T 5/60, G06T 11/00, G06V 10/60, G06V 10/774, G06V 10/80, G06V 10/82, G06T 5/77, G06N 3/088, G06N 3/084

(54) **METHOD AND ELECTRONIC DEVICE FOR CONVERTING IMAGE**

(30) Priority: 29.07.2024 KR 20240100265
(71) Applicant: GenGenAI Inc., Seoul 06038 (KR)
(72) Inventor: CHO, Hojin, 06038 Seoul (KR); KIM, Sangil, 06038 Seoul (KR); YEO, Donghun, 06038 Seoul (KR); SUNG, Myungchul, 06038 Seoul (KR); GWEON, Sungan, 06038 Seoul (KR); LEE, Kangsoo, 06038 Seoul (KR); LEE, Seongjin, 06038 Seoul (KR); YOU, Dongmin, 06038 Seoul (KR); HEO, Hoyeong, 06038 Seoul (KR); JO, Hanseok, 06038 Seoul (KR); LEE, Hwayoon, 06038 Seoul (KR)
(74) Representative: Studio Torta S.p.A.

(57) **Abstract**

An image conversion method includes obtaining a first image, generating, using a machine learning model, a second image by converting a domain style of at least a portion of the first image into a first domain style, and outputting the second image. The machine learning model is trained to output a second training image of the first domain style associated with a first training image of a second domain style in response to receiving the first training image of the second domain style as input.

## Description

### BACKGROUND

### Field

The present disclosure relates to an image conversion method and an electronic device.

### Description of Related Art

Image composition technology is a technology that performs tasks such as removing a specific object from a real image or adding a new object, and is usefully utilized in various application fields such as computer graphics, video editing, and virtual reality.

Meanwhile, image composition technology is one of the research topics that has received much attention in the field of computer vision, and with the development of artificial neural networks, many attempts have been made to generate natural composite images. For example, a more natural composite image with a boundary of a composite area can be generated through image inpainting using a generative model (e.g., a diffusion model). However, in the case of conventional image composition technology, because processing is focused only on the color elements of the image in the image harmonization step of the background image and the foreground image, a problem may arise in which the foreground image looks unnatural compared to the background image. Accordingly, there is a need for the development of image conversion technology for composing an image in consideration of the domain style of the image.

### SUMMARY

The present disclosure provides an image conversion method and an electronic device for solving the above-mentioned problems.

The present disclosure may be implemented in various ways, including a method, an apparatus (system), and/or a non-transitory computer-readable recording medium storing computer-readable instructions.

In some embodiments, an image conversion method performed by at least one processor, includes obtaining a first image, generating, using a machine learning model, a second image by converting a domain style of at least a portion of the first image into a first domain style, and outputting the second image. The machine learning model is trained to output a second training image of the first domain style associated with a first training image of a second domain style in response to receiving the first training image of the second domain style as input.

In some embodiments, the first training image of the second domain style may be an image obtained by blur-processing the second training image of the first domain style. The machine learning model may be one-shot trained using the blurred image of the second training image of the first domain style.

In some embodiments, the obtained first image may be an image in which a background image and a foreground image are composited.

In some embodiments, the background image may have the first domain style, and the foreground image may have a domain style different from the first domain style and may be included in at least the portion of the obtained first image.

In some embodiments, the machine learning model may be trained using the background image as the second training image.

In some embodiments, the obtained first image may be an image of a third domain style captured by a first camera, and the second training image used to train the machine learning model may be an image of the first domain style captured by a second camera different from the first camera.

In some embodiments, the first domain style may be determined based on at least one of color information for at least one of hue, brightness, or saturation of the second training image, and noise information of a camera that captured the second training image.

In some embodiments, the machine learning model may include an encoder trained to output at least one feature vector from at least one image having an arbitrary domain style in response to receiving the at least one image as input, and a decoder trained to generate the second training image of the first domain style using a trained feature vector. The trained feature vector may be a feature vector generated by the encoder in response to receiving the first training image of the second domain style as input.

In some embodiments, a non-transitory computer-readable recording medium storing computer-readable instructions may be provided. The computer-readable instructions, when executed by at least one processor, may cause the at least one processor to obtain a first image, generate, using a machine learning model, a second image by converting a domain style of at least a portion of the first image into a first domain style, and output the second image. The machine learning model may be trained to output a second training image of the first domain style associated with a first training image of a second domain style in response to receiving the first training image of the second domain style as input.

In some embodiments, an electronic device may include a memory, and at least one processor coupled to the memory and configured to execute computer-readable instructions stored in the memory. The at least one processor may be configured to obtain a first image, generate, using a machine learning model, a second image by converting a domain style of at least a portion of the first image into a first domain style, and output the second image. The machine learning model may be trained to output a second training image of the first domain style associated with a first training image of a second domain style in response to receiving the first training image of the second domain style as input.

In some embodiments, the first training image of the second domain style may be an image obtained by blur-processing the second training image of the first domain style, and the machine learning model may be one-shot trained using the blurred image of the second training image of the first domain style.

In some embodiments, the obtained first image may be an image in which a background image and a foreground image are composited.

In some embodiments, the background image may have the first domain style, and the foreground image may have a domain style different from the first domain style and may be included in at least the portion of the obtained first image.

In some embodiments, the machine learning model may be trained using the background image as the second training image.

In some embodiments, the obtained first image may be an image of a third domain style captured by a first camera, and the second training image used to train the machine learning model may be an image of the first domain style captured by a second camera different from the first camera.

In some embodiments, the first domain style may be determined based on at least one of color information for at least one of hue, brightness, or saturation of the second training image, and noise information of a camera that captured the second training image.

In some embodiments, the machine learning model may include an encoder trained to output at least one feature vector from at least one image having an arbitrary domain style in response to receiving the at least one image as input, and a decoder trained to generate the second training image of the first domain style using a trained feature vector. The trained feature vector may be a feature vector generated by the encoder in response to receiving the first training image of the second domain style as input.

According to some embodiments of the present disclosure, by converting the domain style of at least a portion of a composite image, it is possible to support the generation of a more natural composite image.

In addition, according to some embodiments of the present disclosure, by converting the domain style of at least a portion of an image captured by a different camera, it is possible to support the generation of an image as if it were captured by a camera desired by the user.

The effects of the present disclosure are not limited to the effects mentioned above, and other unmentioned effects will be clearly understood by those of ordinary skill in the art to which the present disclosure pertains (hereinafter referred to as 'a person of ordinary skill in the art') from the description of the claims.

### BRIEF DESCRIPTION OF THE DRAWINGS

Embodiments of the present disclosure will be described with reference to the accompanying drawings described below, wherein like reference numerals denote like elements, but are not limited thereto.
FIG. 1 is a diagram illustrating a configuration of an electronic device for image conversion according to an embodiment of the present disclosure.
FIG. 2 is a schematic diagram illustrating a configuration in which an information processing system is communicably connected with a plurality of user terminals in relation to data processing according to an embodiment of the present disclosure.
FIG. 3 is a block diagram illustrating an internal configuration of a user terminal and an information processing system according to an embodiment of the present disclosure.
FIG. 4 is a diagram illustrating a method of converting a composite image according to an embodiment of the present disclosure.
FIG. 5 is a diagram illustrating a method of converting an image captured by a different camera according to an embodiment of the present disclosure.
FIG. 6 is a diagram illustrating a method of training a machine learning model according to an embodiment of the present disclosure.
FIG. 7 is a diagram illustrating an artificial neural network model according to an embodiment of the present disclosure.
FIG. 8 is a diagram illustrating a training method for image conversion according to an embodiment of the present disclosure.
FIG. 9 is a diagram illustrating an image conversion method according to an embodiment of the present disclosure.

### DETAILED DESCRIPTION

Hereinafter, specific details for implementing the present disclosure will be described in detail with reference to the accompanying drawings. However, in the following description, when there is a risk of unnecessarily obscuring the gist of the present disclosure, a detailed description of well-known functions or configurations will be omitted.

In the accompanying drawings, the same or corresponding components are given the same reference numerals. In addition, in the description of the following embodiments, a redundant description of the same or corresponding components may be omitted. However, even if a description of a component is omitted, it is not intended that such a component is not included in any embodiment.

The advantages and features of the disclosed embodiments and the methods of achieving them will become clear by referring to the embodiments described below in conjunction with the accompanying drawings. However, the present disclosure is not limited to the embodiments disclosed below, but may be implemented in various different forms, and these embodiments are provided only to make the present disclosure complete and to fully inform the scope of the invention to a person of ordinary skill in the art.

The terms used in this specification will be briefly described, and the disclosed embodiments will be described in detail. The terms used in this specification were selected as general terms that are currently widely used while considering the functions in the present disclosure, but the terms may vary depending on the intention of a technician in the relevant field, precedents, the emergence of new technologies, and the like. In addition, in specific cases, there are terms arbitrarily selected by the applicant, and in this case, the meaning will be described in detail in the corresponding description of the invention. Therefore, the terms used in the present disclosure should be defined based on the meaning of the terms and the overall content of the present disclosure, not just the names of the terms.

In this specification, the singular expression includes the plural expression unless it is specifically stated to be singular in the context. In addition, the plural expression includes the singular expression unless it is specifically stated to be plural in the context. Throughout the specification, when a certain part is said to include a certain component, it means that it may further include other components, not excluding other components, unless there is a specific statement to the contrary.

In addition, the term 'module' or 'unit' as used in the specification means a software or hardware component, and the 'module' or 'unit' performs certain roles. However, the 'module' or 'unit' is not limited to software or hardware. A 'module' or 'unit' may be configured to be in an addressable storage medium and may be configured to reproduce one or more processors. Thus, as an example, a 'module' or 'unit' may include at least one of software components, object-oriented software components, class components, and task components, and processes, functions, attributes, procedures, subroutines, segments of program code, drivers, firmware, microcode, circuits, data, databases, data structures, tables, arrays, or variables. The functions provided in the components and 'modules' or 'units' may be combined into a smaller number of components and 'modules' or 'units' or further separated into additional components and 'modules' or 'units'.

According to an embodiment of the present disclosure, a 'module' or 'unit' may be implemented as a processor and a memory. A 'processor' should be broadly interpreted to include a general-purpose processor, a central processing unit (CPU), a microprocessor, a digital signal processor (DSP), a controller, a microcontroller, a state machine, and the like. In some environments, a 'processor' may refer to an application specific integrated circuit (ASIC), a programmable logic device (PLD), a field programmable gate array (FPGA), and the like. A 'processor' may also refer to a combination of processing devices, such as, for example, a combination of a DSP and a microprocessor, a combination of a plurality of microprocessors, a combination of one or more microprocessors combined with a DSP core, or any other such combination of configurations. In addition, a 'memory' should be broadly interpreted to include any electronic component capable of storing electronic information. A 'memory' may refer to various types of processor-readable media such as random access memory (RAM), read-only memory (ROM), non-volatile random access memory (NVRAM), programmable read-only memory (PROM), erasable-programmable read-only memory (EPROM), electrically erasable PROM (EEPROM), flash memory, magnetic or optical data storage devices, registers, and the like. The memory is said to be in electronic communication with the processor if the processor can read information from and/or write information to the memory. The memory integrated into the processor is in electronic communication with the processor.

In addition, terms such as first, second, A, B, (a), (b), etc. used in the following embodiments are used only to distinguish one component from another, and the essence, order, or sequence of the corresponding component is not limited by the term.

In addition, in the following embodiments, when a component is described as being 'connected', 'coupled', or 'interfaced' to another component, the component may be directly connected or accessed to the other component, but it should be understood that another component may be 'connected', 'coupled', or 'interfaced' between each component.

In addition, 'comprises' and/or 'comprising' used in the following embodiments do not exclude the presence or addition of one or more other components, steps, operations, and/or elements, in addition to the stated components, steps, operations, and/or elements.

In the present disclosure, 'domain style' refers to the visual characteristics and/or artistic style of an image, and may represent a unique combination of Field Of View (FOV) of the camera that captured the image, camera parameters, image color, texture, pattern, shape, and other visual elements that define the overall appearance and aesthetic quality of the image. For example, the domain style of an image may be determined by at least one of color information for at least one of chromaticity, brightness, or saturation of the image, or parameters of the camera that captured the image, or noise information. In addition, when the cameras that captured the images are different, the images captured by each camera may have different domain styles according to various characteristics of the cameras.

Hereinafter, various embodiments of the present disclosure will be described in detail with reference to the accompanying drawings.

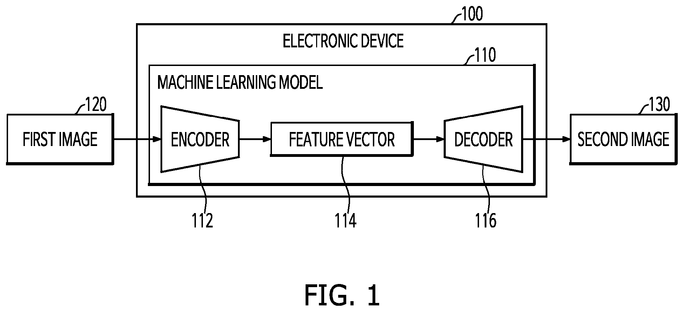

FIG. 1 is a diagram illustrating a configuration of an electronic device for image conversion according to an embodiment of the present disclosure. Referring to FIG. 1, an electronic device 100 may obtain a first image 120, and may generate a second image 130 by converting a domain style of at least a portion of the first image 120 using a machine learning model 110. Hereinafter, for convenience of description, the domain style converted through the machine learning model 110 may be referred to as a first domain style. Here, the machine learning model 110 may be trained to output a second training image of the first domain style associated with an input training image when a training image (e.g., a first training image) of a domain style (e.g., a second domain style) different from the first domain style is input. For example, the machine learning model 110 may receive an image (a first training image) in which at least a portion has a domain style different from the first domain style, and may output an image (a second training image) in which only the area having a domain style different from the first domain style is converted to the first domain style without changing the arrangement structure of objects included in the image.

According to an embodiment, the machine learning model 110 may include an encoder 112 trained to output at least one feature vector 114 from at least one image by receiving at least one image having an arbitrary domain style, and a decoder 116 trained to generate the second training image of the first domain style using a training feature vector. Here, the training feature vector may be a feature vector 114 generated by the encoder 112 receiving the first training image of the second domain style. In addition, the feature vector 114 may be referred to as a latent vector, which is a latent vector-type variable that the input image has, and may include a parameter that can represent the characteristics of the input image in a distribution form.

In the present disclosure, the encoder 112 is a pre-trained model that has already been trained on a large data set without additional training, and only the decoder 116 may be trained. For example, the encoder 112 may include an encoder that has already been trained in an AutoEncoder (AE), a variational AE (VAE), or the like. However, the encoder 112 is not limited thereto, and any model trained to output at least one feature vector 114 from an input image may be used as the encoder 112 of the present disclosure. In addition, the decoder 116 of the present disclosure may be trained to generate an image that is the same or similar in content to an input image (the first image 120) but has the same or similar characteristics as a target image (an image of the first domain style) using the feature vector 114. For example, the decoder 116 may be trained to convert only the area having a domain style different from the first domain style into the first domain style without changing the arrangement structure of objects included in the input image. In addition, the decoder 116 of the present disclosure may be capable of training (e.g., one-shot (1 shot) training) with only one image having a target characteristic (e.g., an image of the first domain style). For example, if the machine learning model 110 receives an original image of the first domain style, the machine learning model 110 may generate a first training image by converting at least a portion of the original image to a domain style other than the first domain style, and may input the generated first training image to the decoder 116. At this time, the decoder 116 may output a second training image of the first domain style based on the first training image, and may be trained such that an error between the outputted second training image of the first domain style and the original image of the first domain style is reduced. That is, the decoder 116 may be one-shot trained using the original image of the first domain style and an image obtained by converting the domain style of at least a portion of the original image of the first domain style into another domain style.

According to an embodiment, the image used for training the machine learning model 110, that is, the first training image in which at least a portion has a domain style different from the first domain style, may include an image obtained by blur-processing the second training image of the first domain style. For example, the machine learning model 110 may receive an image obtained by blur-processing an original image of the first domain style as a first training image, output a second training image of the first domain style, and be trained such that an error between the outputted second training image of the first domain style and the original image of the first domain style is reduced.

According to an embodiment, the first image 120 input to the machine learning model 110 may include a composited image of a background image and a foreground image. For example, the first image 120 may be a composite image in which a foreground image is arranged in a partial area and a background image is arranged in the remaining area. Here, the background image is an image representing a basic environment or background in a composition work, and may be an image including the surrounding environment, place, landscape, etc. of the composite image, and the foreground image is an image including a composite target object, and may include a person, an animal, an object, etc. as the composite target object. For example, the background image may have the first domain style, and the foreground image may have a domain style different from the first domain style and be included in a partial area of the first image 120. In this case, the electronic device 100 may, through the machine learning model 110, obtain a second image 130 having the first domain style by converting the domain style of the foreground image included in the partial area of the first image 120 into the first domain style. At this time, the area including the background image having the first domain style does not change, and only the area including the foreground image having a different domain style may be converted to the first domain style. Accordingly, the electronic device 100 may convert a composite image to have one domain style through the machine learning model 110, thereby generating a more natural composite image.

According to an embodiment, the machine learning model 110 may be trained using the background image as the second training image. For example, the machine learning model 110 may receive a first training image, which is obtained by converting (e.g., blur-processing) at least a portion of a background image of the first domain style into a domain style different from the first domain style, output a second training image of the first domain style, and be trained such that an error between the outputted second training image of the first domain style and the background image of the first domain style is reduced. For example, the machine learning model 110 may be one-shot trained using the background image of the first domain style so that a composite image of the first domain style is output.

According to an embodiment, the first image 120 input to the machine learning model 110 is an image of a domain style (e.g., a third domain style) different from the first domain style, captured using a first camera, and the second training image used for training the machine learning model 110 may be an image of the first domain style captured using a second camera different from the first camera. In this case, the electronic device 100 may, through the machine learning model 110, obtain a second image 130 having the first domain style by converting the domain style of the first image 120, which has a domain style different from the first domain style, into the first domain style. Accordingly, the electronic device 100 may, through the machine learning model 110, convert the domain style of an image captured by a different camera (e.g., the first camera), thereby generating an image as if it were captured by a target camera (e.g., the second camera).

According to an embodiment, the machine learning model 110 may be trained using an image captured using a second camera as the second training image. For example, the machine learning model 110 may receive a first training image, which is obtained by converting (e.g., blur-processing) at least a portion of an image of the first domain style captured using the second camera into a domain style different from the first domain style, output a second training image of the first domain style, and be trained such that an error between the outputted second training image of the first domain style and the image of the first domain style captured using the second camera is reduced. For example, the machine learning model 110 may be one-shot trained using an image of the first domain style captured using a target camera (e.g., the second camera) so that an image of the first domain style is output as if captured using the target camera.

According to an embodiment, the domain style may be determined by at least one of color information for at least one of hue, brightness, or saturation of the image, or noise information of the camera that captured the image. For example, the first domain style converted through the machine learning model 110 may be determined by at least one of color information for at least one of hue, brightness, or saturation of the second training image output through the machine learning model 110, or noise information of the camera that captured the second training image.

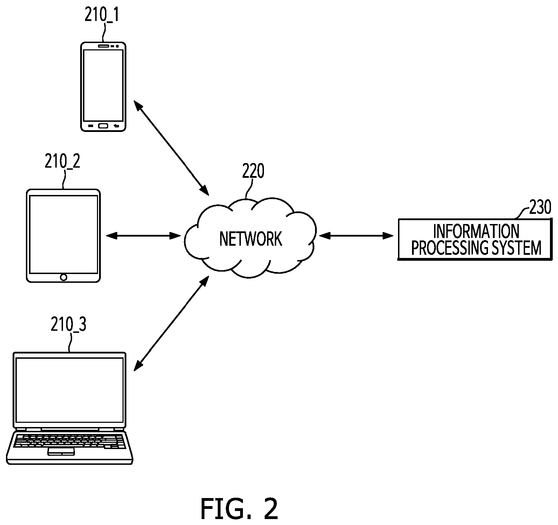

FIG. 2 is a schematic diagram illustrating a configuration in which an information processing system 230 is communicably connected with a plurality of user terminals 210_1, 210_2, and 210_3 in relation to data processing according to an embodiment of the present disclosure. The information processing system 230 may include a system(s) that can provide a data processing service (for example, an image conversion-based service described with reference to FIG. 1). In an embodiment, the information processing system 230 may include one or more server devices and/or databases that can store, provide, and execute computer-executable programs (for example, a downloadable application) and data related to the data processing service, or one or more distributed computing devices and/or distributed databases based on a cloud computing service. For example, the information processing system 230 may include separate systems (for example, servers) for the data processing service.

A data processing service, etc. provided by the information processing system 230 may be provided to a user through a data processing application, a web browser application, etc. installed in each of the plurality of user terminals 210_1, 210_2, and 210_3.

The plurality of user terminals 210_1, 210_2, and 210_3 may communicate with the information processing system 230 through a network 220. The network 220 may be configured to enable communication between the plurality of user terminals 210_1, 210_2, and 210_3 and the information processing system 230. The network 220 may be configured as a wired network such as, for example, Ethernet, Power Line Communication, a telephone line communication device, and RS-serial communication, a wireless network such as a mobile communication network, a Wireless LAN (WLAN), Wi-Fi, Bluetooth, and ZigBee, or a combination thereof, depending on the installation environment. The communication method is not limited, and may include not only a communication method using a communication network that the network 220 can include (for example, a mobile communication network, a wired Internet, a wireless Internet, a broadcasting network, a satellite network, etc.), but also short-range wireless communication between the user terminals 210_1, 210_2, and 210_3.

For example, the plurality of user terminals 210_1, 210_2, and 210_3 may transmit a data processing request, and a command associated with a user request for data processing to the information processing system 230 through the network 220, and the information processing system 230 may receive the command.

In FIG. 2, a mobile phone terminal 210_1, a tablet terminal 210_2, and a PC terminal 210_3 are shown as examples of user terminals, but the present disclosure is not limited thereto, and the user terminals 210_1, 210_2, and 210_3 may be any computing device capable of wired and/or wireless communication and on which a data processing application, etc. can be installed and executed. For example, a user terminal may include a smartphone, a mobile phone, a navigation system, a computer, a laptop, a terminal for digital broadcasting, a Personal Digital Assistant (PDA), a Portable Multimedia Player (PMP), a tablet PC, a game console, a wearable device, an Internet of Things (IoT) device, a virtual reality (VR) device, an augmented reality (AR) device, and the like. In addition, although three user terminals 210_1, 210_2, and 210_3 are shown in FIG. 2 as communicating with the information processing system 230 through the network 220, the present disclosure is not limited thereto, and a different number of user terminals may be configured to communicate with the information processing system 230 through the network 220.

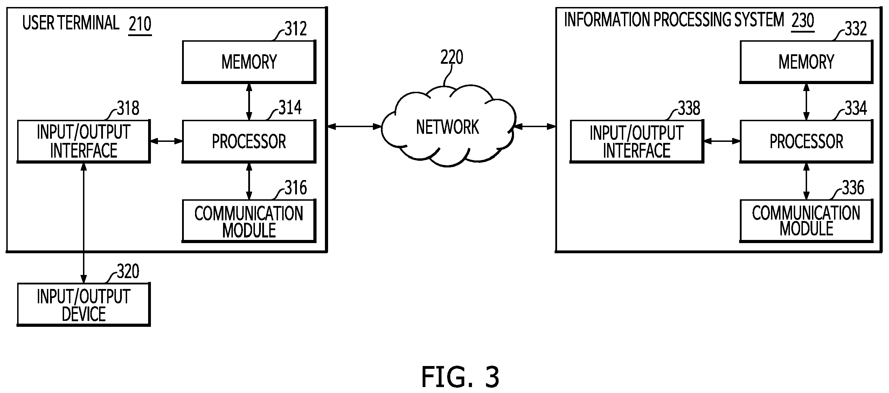

FIG. 3 is a block diagram illustrating an internal configuration of a user terminal 210 and an information processing system 230 according to an embodiment of the present disclosure. The user terminal 210 may refer to any computing device on which a data processing application, etc. can be executed and which is capable of wired/wireless communication, and may include, for example, the mobile phone terminal 210_1, the tablet terminal 210_2, the PC terminal 210_3, etc. of FIG. 2. As shown, the user terminal 210 may include a memory 312, a processor 314, a communication module 316, and an input/output interface 318. Similarly, the information processing system 230 may include a memory 332, a processor 334, a communication module 336, and an input/output interface 338. As shown in FIG. 3, the user terminal 210 and the information processing system 230 may be configured to communicate information and/or data through the network 220 using their respective communication modules 316 and 336. In addition, an input/output device 320 may be configured to input information and/or data to the user terminal 210 through the input/output interface 318 or to output information and/or data generated from the user terminal 210.

The memories 312 and 332 may include any non-transitory computer-readable recording medium. According to an embodiment, the memories 312 and 332 may include a permanent mass storage device such as a read only memory (ROM), a disk drive, a solid state drive (SSD), a flash memory, and the like. As another example, a permanent mass storage device such as a ROM, an SSD, a flash memory, a disk drive, etc. may be included in the user terminal 210 or the information processing system 230 as a separate permanent storage device distinguished from the memory. In addition, an operating system and at least one program code (for example, a code for an application associated with a data processing service, etc.) may be stored in the memories 312 and 332.

These software components may be loaded from a computer-readable recording medium separate from the memories 312 and 332. Such a separate computer-readable recording medium may include a recording medium directly connectable to the user terminal 210 and the information processing system 230, and may include, for example, a computer-readable recording medium such as a floppy drive, a disk, a tape, a DVD/CD-ROM drive, a memory card, and the like. As another example, the software components may be loaded into the memories 312 and 332 through the communication modules 316 and 336, not a computer-readable recording medium. For example, at least one program may be loaded into the memories 312 and 332 based on a computer program (for example, an application associated with a data processing service, etc.) installed by files provided through the network 220 by developers or a file distribution system that distributes installation files of the application.

The processors 314 and 334 may be configured to process instructions of a computer program by performing basic arithmetic, logic, and input/output operations. The instructions may be provided to the processors 314 and 334 by the memories 312 and 332 or the communication modules 316 and 336. For example, the processors 314 and 334 may be configured to execute received instructions according to program code stored in a recording device such as the memories 312 and 332.

The communication modules 316 and 336 may provide a configuration or function for the user terminal 210 and the information processing system 230 to communicate with each other through the network 220, and may provide a configuration or function for the user terminal 210 and/or the information processing system 230 to communicate with another user terminal or another system (for example, a separate cloud system, etc.). For example, a request or data (for example, a data processing request or data, etc.) generated by the processor 314 of the user terminal 210 according to program code stored in a recording device such as the memory 312 may be transmitted to the information processing system 230 through the network 220 under the control of the communication module 316. Conversely, a control signal or a command provided under the control of the processor 334 of the information processing system 230 may be received by the user terminal 210 through the communication module 316 of the user terminal 210 via the communication module 336 and the network 220.

The input/output interface 318 may be a means for interfacing with the input/output device 320. As an example, the input device may include a device such as a camera including an audio sensor and/or an image sensor, a keyboard, a microphone, a mouse, and the output device may include a device such as a display, a speaker, a haptic feedback device, and the like. As another example, the input/output interface 318 may be a means for interfacing with a device in which a configuration or function for performing input and output is integrated into one, such as a touchscreen. Although the input/output device 320 is shown in FIG. 3 as not being included in the user terminal 210, the present disclosure is not limited thereto, and the input/output device 320 may be configured as a single device with the user terminal 210. In addition, the input/output interface 338 of the information processing system 230 may be a means for interfacing with a device (not shown) for input or output that is connected to the information processing system 230 or that the information processing system 230 may include. Although the input/output interfaces 318 and 338 are shown in FIG. 3 as elements configured separately from the processors 314 and 334, the present disclosure is not limited thereto, and the input/output interfaces 318 and 338 may be configured to be included in the processors 314 and 334.

The user terminal 210 and the information processing system 230 may include more components than the components of FIG. 3. However, there is no need to clearly show most conventional technical components. In an embodiment, the user terminal 210 may be implemented to include at least a part of the above-described input/output device 320. In addition, the user terminal 210 may further include other components such as a transceiver, a Global Positioning System (GPS) module, a camera, various sensors, a database, and the like. For example, if the user terminal 210 is a smartphone, the user terminal 210 may include components that a smartphone generally includes, and for example, various components such as an acceleration sensor, a gyro sensor, a microphone module, a camera module, various physical buttons, buttons using a touch panel, input/output ports, a vibrator for vibration, and the like may be implemented to be further included in the user terminal 210.

According to an embodiment, the processor 314 of the user terminal 210 may be configured to operate a data processing application or a web browser application that provides a data processing service. At this time, program code associated with the corresponding application may be loaded into the memory 312 of the user terminal 210. While the application is operating, the processor 314 of the user terminal 210 may receive information and/or data provided from the input/output device 320 through the input/output interface 318 or receive information and/or data from the information processing system 230 through the communication module 316, and may process the received information and/or data and store the processed information and/or data in the memory 312. In addition, such information and/or data may be provided to the information processing system 230 through the communication module 316.

While the data processing application is operating, the processor 314 may receive voice data, text, an image, a video, etc. input or selected through an input device such as a touch screen, a keyboard, an audio sensor and/or an image sensor, a camera, a microphone, etc. connected to the input/output interface 318, and may store the received voice data, text, image, and/or video in the memory 312 or provide the received voice data, text, image, and/or video to the information processing system 230 through the communication module 316 and the network 220. In an embodiment, the processor 314 may receive a user input input through the input device, and may provide data/a request corresponding to the received user input to the information processing system 230 through the network 220 and the communication module 316.

The processor 314 of the user terminal 210 may transmit information and/or data to the input/output device 320 through the input/output interface 318 to be output. For example, the processor 314 of the user terminal 210 may output the processed information and/or data through an output device 320 such as a display output capable device (e.g., a touch screen, a display, etc.), a voice output capable device (e.g., a speaker), etc.

The processor 334 of the information processing system 230 may be configured to manage, process, and/or store information and/or data received from the plurality of user terminals 210 and/or a plurality of external systems. The information and/or data processed by the processor 334 may be provided to the user terminal 210 through the communication module 336 and the network 220.

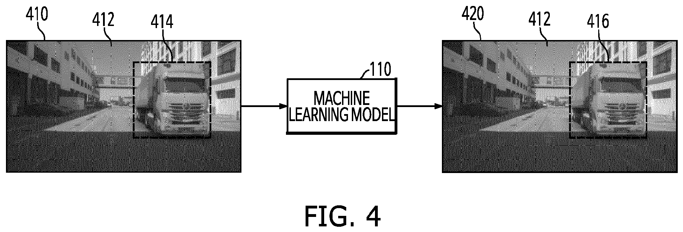

FIG. 4 is a diagram illustrating a method of converting a composite image according to an embodiment of the present disclosure. Referring to FIG. 4, a processor (e.g., the processor 314, 334 of FIG. 3) of an electronic device for image conversion (e.g., the electronic device 100 of FIG. 1) may obtain a composite image 410, and may generate an image 420 having one domain style by converting a domain style of at least a portion of the obtained composite image 410 using a machine learning model 110. Hereinafter, for convenience of description, the domain style converted through the machine learning model 110 may be referred to as a first domain style. For example, the composite image 410 may be an image in which a background image 412 is arranged in most of the area and a foreground image 414 is arranged in the remaining partial area. At this time, in the composite image 410, the area where the background image 412 is arranged may correspond to the first domain style, and in the composite image 410, the area where the foreground image 414 is arranged may correspond to a domain style other than the first domain style (e.g., a second domain style). In this case, the processor may, using the machine learning model 110, convert only the foreground image 414 of a different domain style into a foreground image 416 of the first domain style while maintaining the background image 412 having the first domain style. For example, the processor may, through the machine learning model 110, convert the composite image 410 composed of a plurality of domain styles into a composite image 420 having one domain style (the first domain style).

According to an embodiment, the processor may train the machine learning model 110 using the background image used to generate the composite image 410. Here, the background image used as the training image for the machine learning model 110 may be the original background image before the generation of the composite image 410, that is, the background image corresponding to the entire area. For example, the processor may generate a first training image by converting (e.g., blur-processing) at least a portion of a background image of the first domain style into a domain style different from the first domain style. Then, the processor may input the first training image to the machine learning model 110, and may obtain a second training image having the first domain style from the machine learning model 110. At this time, the machine learning model 110 may be trained such that an error between the outputted second training image of the first domain style and the background image of the first domain style is reduced. For example, the machine learning model 110 may be one-shot trained using the background image of the first domain style so that a composite image 420 of the first domain style is output.

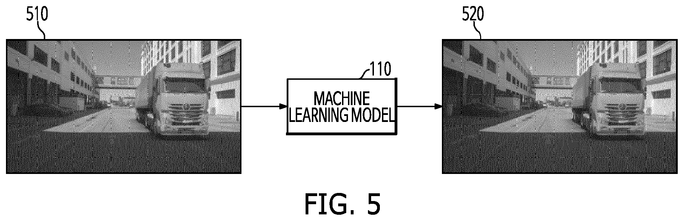

FIG. 5 is a diagram illustrating a method of converting an image captured by a different camera according to an embodiment of the present disclosure. Referring to FIG. 5, a processor (e.g., the processor 314, 334 of FIG. 3) of an electronic device for image conversion (e.g., the electronic device 100 of FIG. 1) may obtain an image 510 captured using a camera other than a target camera (hereinafter, referred to as a second camera) (hereinafter, referred to as a first camera), and may generate an image 520 as if captured using the target camera by converting a domain style of the obtained image 510 using a machine learning model 110. Hereinafter, for convenience of description, the domain style converted through the machine learning model 110 may be referred to as a first domain style. In addition, the first domain style may correspond to the domain style of an image captured using the second camera. For example, the first domain style may be determined by at least one of color information for at least one of hue, brightness, or saturation of an image captured using the second camera, or noise information of the second camera. In addition, the image 510 captured using the first camera may have a domain style other than the first domain style (e.g., a third domain style). In this case, the processor may, using the machine learning model 110, obtain an image 520 having the first domain style by converting the domain style of the image 510, which has a domain style other than the first domain style, into the first domain style. For example, the processor may, through the machine learning model 110, generate an image 520 as if captured by the second camera by converting the domain style of the image 510 captured by the first camera into the first domain style.

According to an embodiment, the processor may train the machine learning model 110 using an image captured using the second camera. For example, a first training image may be generated by converting (e.g., blur-processing) at least a portion of an image of the first domain style captured using the second camera into a domain style different from the first domain style. Then, the processor may input the first training image to the machine learning model 110, and may obtain a second training image having the first domain style from the machine learning model 110. At this time, the machine learning model 110 may be trained such that an error between the outputted second training image of the first domain style and the image of the first domain style captured using the second camera is reduced. For example, the machine learning model 110 may be one-shot trained using an image of the first domain style captured using the second camera (target camera) so that an image 520 of the first domain style is output as if captured using the second camera.

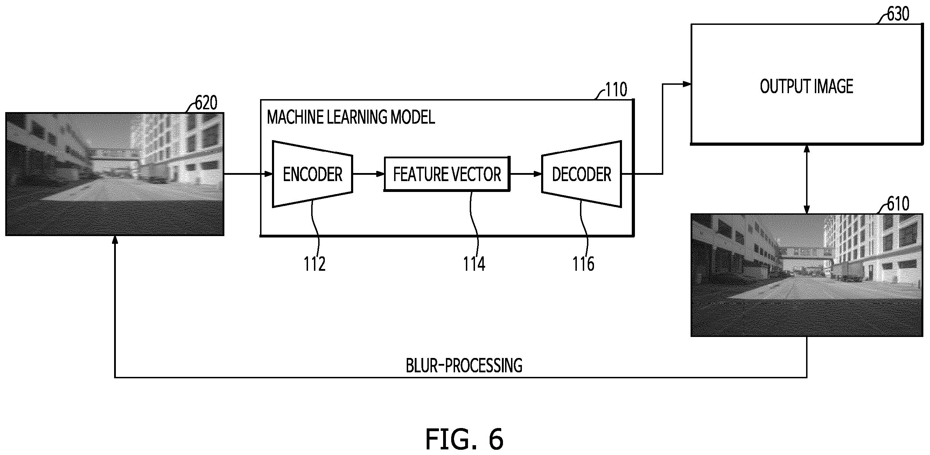

FIG. 6 is a diagram illustrating a method of training a machine learning model according to an embodiment of the present disclosure. Referring to FIG. 6, a processor (e.g., the processor 314, 334 of FIG. 3) of an electronic device for image conversion (e.g., the electronic device 100 of FIG. 1) may train the machine learning model 110 using a first training image 620 of a second domain style, which is not the first domain style, and a second training image 610 of the first domain style. Here, the first training image 620 of the second domain style may include an image obtained by converting at least a portion of the second training image 610 of the first domain style into the second domain style. According to an embodiment, the first training image 620 of the second domain style may include an image obtained by blur-processing at least a portion of the second training image 610 of the first domain style. That is, the processor may train (e.g., one-shot train) the machine learning model 110 using only one image having the first domain style (e.g., the second training image 610). For example, if the processor obtains the second training image 610 having the first domain style, the processor may generate a first training image 620 by converting at least a portion of the second training image 610 to a domain style other than the first domain style. Then, the processor may input the generated first training image 620 to the machine learning model 110. At this time, the machine learning model 110 may output an output image 630 of the first domain style based on the first training image 620, and may be trained such that an error between the output image 630 of the first domain style and the second training image 610 of the first domain style is reduced.

According to an embodiment, the machine learning model 110 may include an encoder 112 and a decoder 116. The encoder 112 may be trained to output at least one feature vector 114 from at least one image by receiving at least one image having an arbitrary domain style. For example, the encoder 112 may generate a feature vector 114 including a parameter that can represent the characteristics of an input image in a distribution form, based on the input image. The decoder 116 may be trained to generate an output image 630 of the first domain style using a training feature vector. Here, the training feature vector may include a feature vector 114 generated by the encoder 112 receiving the first training image 620 of the second domain style. For example, the decoder 116 may be trained to generate an image (e.g., the output image 630) that is the same in content as an input image (e.g., the first training image 620) (or without changing the arrangement structure of objects included in the input image) but has the same or similar characteristics (e.g., domain style) as a target image (e.g., the second training image 610) using the feature vector 114. According to an embodiment, the decoder 116 may be capable of training (e.g., one-shot training) with only one image having a target characteristic (e.g., the second training image 610 of the first domain style). For example, if the processor receives an original image of the first domain style (e.g., the second training image 610), the processor may generate a first training image 620 by converting at least a portion of the original image to a domain style other than the first domain style, and may input the generated first training image 620 to the decoder 116. At this time, the decoder 116 may output an output image 630 of the first domain style based on the first training image 620, and may be trained such that an error between the output image 630 of the first domain style and the original image of the first domain style is reduced. That is, the decoder 116 may be one-shot trained using the original image of the first domain style.

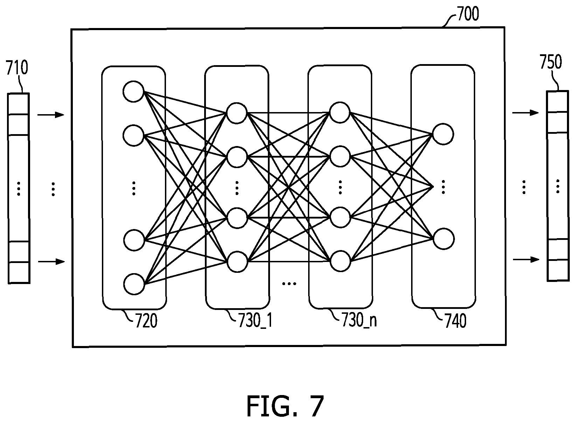

FIG. 7 is a diagram illustrating an artificial neural network model according to an embodiment of the present disclosure. Referring to FIG. 7, an artificial neural network model 700 may, as an example of a machine learning model, represent a statistical learning algorithm implemented based on the structure of a biological neural network, or a structure that executes the algorithm, in machine learning and cognitive science.

According to an embodiment, the artificial neural network model 700 may represent a machine learning model that has problem-solving ability by repeatedly adjusting the weights of synapses of nodes, which are artificial neurons that form a network through the combination of synapses like a biological neural network, to learn so that the error between the correct output corresponding to a specific input and the inferred output is reduced. For example, the artificial neural network model 700 may include any probability model, Neural Network model, etc. used in artificial intelligence learning methods such as Machine Learning, Deep Learning, and the like.

According to an embodiment, the above-described image conversion model (e.g., the machine learning model 110 of FIG. 1) may be generated in the form of the artificial neural network model 700. For example, the artificial neural network model 700 may receive a first image (e.g., the first image 120 of FIG. 1) in which at least a portion has a domain style different from a designated domain style, and based on the first image, may estimate a second image (e.g., the second image 130 of FIG. 1) associated with the first image and having the designated domain style.

The artificial neural network model 700 may be implemented as a Multi-Layer Perceptron (MLP) composed of multiple layers of nodes and connections between them. The artificial neural network model 700 according to this embodiment may be implemented using one of the artificial neural network model structures including a multi-layer perceptron. The artificial neural network model 700 may be composed of an input layer 720 that receives input data 710 (or an input signal) from the outside, an output layer 740 that outputs output data 750 (or an output signal) corresponding to the input data 710, and n (where n is a positive integer) hidden layers 730_1 to 730_n located between the input layer 720 and the output layer 740, which receive a signal from the input layer 720, extract characteristics, and transmit the characteristics to the output layer 740. Here, the output layer 740 may receive a signal from the hidden layers 730_1 to 730_n and output the signal to the outside.

The learning methods of the artificial neural network model 700 may include a Supervised Learning method that learns to be optimized for solving a problem by the input of a correct teacher signal (or label), and an Unsupervised Learning method that does not require a teacher signal. According to an embodiment, an electronic device (e.g., the electronic device 100 of FIG. 1) according to an embodiment of the present disclosure may train the artificial neural network model 700 using an image having a designated domain style.

According to an embodiment, the electronic device may generate training data for training the artificial neural network model 700. For example, the electronic device may generate a training data set including an image having a designated domain style and an image obtained by converting the image of the designated domain style to another domain style. As an example, the electronic device may generate a training data set including an image having a designated domain style and an image obtained by converting the image of the designated domain style to another domain style by blur-processing the image. Then, the electronic device may, based on the generated training data set, train the artificial neural network model 700 for generating an image having the designated domain style using an image in which at least a portion has a domain style different from the designated domain style.

According to an embodiment, an input variable of the artificial neural network model 700 may include an image in which at least a portion has a domain style different from a designated domain style. When the above-described input variable is input through the input layer 720 as described above, an output variable output from the output layer 740 of the artificial neural network model 700 may be an image having the designated domain style.

In this way, a plurality of output variables corresponding to a plurality of input variables are matched to the input layer 720 and the output layer 740 of the artificial neural network model 700, respectively, and by adjusting the synapse values between the nodes included in the input layer 720, the hidden layers 730_1 to 730_n, and the output layer 740, it may be trained to extract the correct output corresponding to a specific input. Through this learning process, the characteristics hidden in the input variables of the artificial neural network model 700 may be identified, and the synapse values (or weights) between the nodes of the artificial neural network model 700 may be adjusted so that an error between an output variable calculated based on the input variables and a target output is reduced. In addition, the electronic device may learn an algorithm that receives an image in which at least a portion has a domain style different from a designated domain style as input, and may learn in a way that minimizes the loss with an image having the designated domain style (i.e., annotation information). Using the artificial neural network model 700 thus trained, an image having the designated domain style may be estimated.

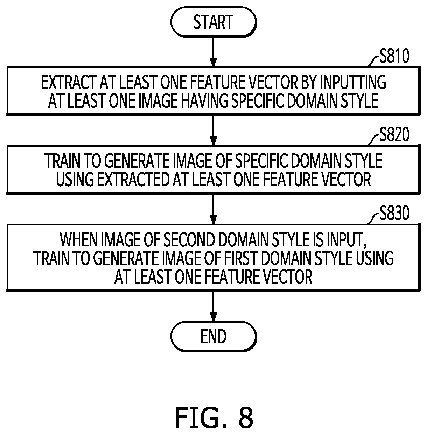

FIG. 8 is a diagram illustrating a training method for image conversion according to an embodiment of the present disclosure. Referring to FIG. 8, a processor (e.g., the processor 314, 334 of FIG. 3) of an electronic device for image conversion (e.g., the electronic device 100 of FIG. 1) may, in step S810, extract at least one feature vector by inputting at least one image having a specific domain style. For example, the processor may input at least one image having a specific domain style to an encoder (e.g., the encoder 112 of FIGS. 1 and 6) of a machine learning model (e.g., the machine learning model 110 of FIGS. 1 and 4 to 6). At this time, the encoder may be trained to output at least one feature vector (e.g., the feature vector 114 of FIGS. 1 and 6) from at least one image having a specific domain style. For example, the processor may extract at least one feature vector from at least one image having a specific domain style through the encoder.

In step S820, the processor may train to generate an image of a specific domain style using the extracted at least one feature vector. For example, the processor may train a decoder (e.g., the decoder 116 of FIGS. 1 and 6) of the machine learning model to generate an image of a specific domain style using the at least one feature vector.

The training process in step 810 may correspond to the training process of an encoder included in an autoencoder, a variational autoencoder, etc., and the training process in step 820 may correspond to the training process of a decoder included in an autoencoder, a variational autoencoder, etc. For example, the processor may, through step 810, train the machine learning model (e.g., the encoder) to extract a feature vector including a parameter that can represent the characteristics of an input image in a distribution form, and may, through step 820, train the machine learning model (e.g., the decoder) to generate an output image having the same or similar characteristics as the input image using the specific vector.

In step S830, when an image of a second domain style (e.g., the image 620 of FIG. 6) is input, the processor may train to generate an image of a first domain style (e.g., the image 630 of FIG. 6) using the at least one feature vector. For example, the processor may input an image of the second domain style to the decoder of the machine learning model, and train the decoder to generate an image of the first domain style using the at least one feature vector. Here, the feature vector may include a feature vector generated by the encoder receiving the image of the second domain style. In addition, the input image of the second domain style may include an image obtained by converting at least a portion of an image of the first domain style (e.g., the image 610 of FIG. 6) into the second domain style. According to an embodiment, the image of the second domain style may include an image obtained by blur-processing at least a portion of the image of the first domain style.

According to an embodiment, the processor may train (e.g., one-shot train) the machine learning model (e.g., the decoder) using only one image having the first domain style (e.g., the image 610 of FIG. 6). For example, if the processor obtains an original image having the first domain style, the processor may generate a training image by converting at least a portion of the original image to a domain style other than the first domain style. Then, the processor may input the generated training image to the machine learning model. At this time, the machine learning model may output an output image of the first domain style based on the training image, and may be trained such that an error between the output image of the first domain style and the original image of the first domain style is reduced.

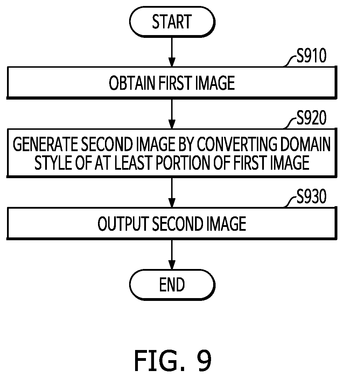

FIG. 9 is a diagram illustrating an image conversion method according to an embodiment of the present disclosure. Referring to FIG. 9, a processor (e.g., the processor 314, 334 of FIG. 3) of an electronic device for image conversion (e.g., the electronic device 100 of FIG. 1) may, in step S910, obtain a first image (e.g., the first image 120 of FIG. 1, the image 410 of FIG. 4, or the image 510 of FIG. 5). Here, the first image may be an image in which at least a portion has a domain style other than a first domain style. As an example, the first image may be a composite image (e.g., the image 410 of FIG. 4) in which a background image having a first domain style is arranged in most of the area, and a foreground image having a domain style other than the first domain style is arranged in the remaining partial area. As another example, the first image may be an image (e.g., the image 510 of FIG. 5) having a domain style other than the first domain style, captured using a camera other than a target camera (hereinafter, referred to as a second camera) (hereinafter, referred to as a first camera).

In step S920, the processor may generate a second image (e.g., the second image 130 of FIG. 1, the image 420 of FIG. 4, or the image 520 of FIG. 5) by converting a domain style of at least a portion of the first image. For example, the processor may generate the second image by converting the domain style of at least a portion of the first image using a machine learning model (e.g., the machine learning model 110 of FIGS. 1 and 4 to 6).

According to an embodiment, when the first image is a composite image, the processor may generate a second image having one domain style by converting the domain style of at least a portion of the first image using the machine learning model. For example, the processor may, using the machine learning model, convert only the foreground image of a different domain style into a foreground image of the first domain style while maintaining the background image having the first domain style in the first image. Accordingly, the processor may convert the first image composed of a plurality of domain styles into a second image having one domain style (the first domain style) through the machine learning model.

According to an embodiment, when the first image is an image captured using a first camera, the processor may generate a second image as if captured using a second camera by converting the domain style of the first image using the machine learning model. For example, the processor may, using the machine learning model, obtain a second image having a first domain style by converting the domain style of the first image, which has a domain style other than the first domain style, into the first domain style. Accordingly, the processor may, through the machine learning model, generate a second image as if captured by the second camera by converting the domain style of the first image captured by the first camera into the first domain style.

In step S930, the processor may output the second image. For example, the processor may output the second image having one domain style (the first domain style).

The above-described flowchart and the above-described description are only an example, and may be implemented differently in some embodiments. For example, in some embodiments, the order of each step may be changed, some steps may be repeatedly performed, some steps may be omitted, or some steps may be added.

The above-described method may be provided as a computer program stored on a computer-readable recording medium for execution on a computer. The medium may continuously store a computer-executable program or temporarily store a program for execution or download. In addition, the medium may be various recording means or storage means in the form of a single or several combined hardware, and is not limited to a medium directly connected to a certain computer system, but may be distributed on a network. Examples of the medium may include a magnetic medium such as a hard disk, a floppy disk, and a magnetic tape, an optical recording medium such as a CD-ROM and a DVD, a magneto-optical medium such as a floptical disk, and a device configured to store program instructions, including ROM, RAM, flash memory, and the like. In addition, another example of a medium may include a recording medium or storage medium managed by an app store that distributes applications or a site, server, etc. that supplies or distributes various other software.

The methods, operations, or techniques of the present disclosure may also be implemented by various means. For example, these techniques may be implemented in hardware, firmware, software, or a combination thereof. Those of ordinary skill in the art will understand that the various exemplary logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Those of ordinary skill in the art may implement the described functionality in varying ways for each particular application, but such implementation decisions should not be interpreted as causing a departure from the scope of the present disclosure.

In a hardware implementation, the processing units used to perform the techniques may be implemented within one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, a computer, or a combination thereof.

Thus, the various illustrative logical blocks, modules, and circuits described in connection with the present disclosure may be implemented or performed with a general purpose processor, a DSP, an ASIC, an FPGA or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

In a firmware and/or software implementation, the techniques may be implemented as instructions stored on a computer-readable medium, such as random access memory (RAM), read-only memory (ROM), non-volatile RAM (NVRAM), programmable read-only memory (PROM), erasable programmable read-only memory (EPROM), electrically erasable PROM (EEPROM), flash memory, a compact disc (CD), a magnetic or optical data storage device, and the like. The instructions may be executable by one or more processors, and may cause the processor(s) to perform certain aspects of the functionality described in the present disclosure.

When implemented in software, the above-described techniques may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium.

For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes CD, laser disc, optical disc, digital versatile disc (DVD), floppy disk and blu-ray disc where disks usually reproduce data magnetically, while discs reproduce data optically with lasers. Combinations of the above should also be included within the scope of computer-readable media.

A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

Although the embodiments described above have been described as utilizing aspects of the presently disclosed subject matter in one or more standalone computer systems, the present disclosure is not so limited, but may be implemented in connection with any computing environment, such as a network or a distributed computing environment. Further, aspects of the subject matter in the present disclosure may be implemented in a plurality of processing chips or devices, and storage may be similarly affected across a plurality of devices. Such devices may include PCs, network servers, and portable devices.

Although the present disclosure has been described in connection with some embodiments herein, various modifications and changes can be made without departing from the scope of the present disclosure, which can be understood by a person of ordinary skill in the art to which the present disclosure pertains. In addition, such modifications and changes should be considered to fall within the scope of the claims attached hereto.

## Claims

1. An image conversion method performed by at least one processor, comprising:
obtaining a first image (120);
generating, using a machine learning model (110), a second image (130) by converting a domain style of at least a portion of the first image (120) into a first domain style; and
outputting the second image (130),
wherein the machine learning model (110) is trained to output a second training image of the first domain style associated with a first training image of a second domain style in response to receiving the first training image of the second domain style as input.

2. The image conversion method as claimed in claim 1, wherein the first training image of the second domain style is an image obtained by blur-processing the second training image of the first domain style, and
the machine learning model (110) is one-shot trained using the blurred image of the second training image of the first domain style.

3. The image conversion method as claimed in claim 1, wherein the obtained first image (120) is an image in which a background image and a foreground image are composited.

4. The image conversion method as claimed in claim 3, wherein the background image has the first domain style, and
the foreground image has a domain style different from the first domain style and is included in at least the portion of the obtained first image (120).

5. The image conversion method as claimed in claim 3, wherein the machine learning model (110) is trained using the background image as the second training image.

6. The image conversion method as claimed in claim 1, wherein the obtained first image (120) is an image of a third domain style captured by a first camera, and
the second training image used to train the machine learning model (110) is an image of the first domain style captured by a second camera different from the first camera.

7. The image conversion method as claimed in claim 1, wherein the first domain style is determined based on at least one of color information for at least one of hue, brightness, or saturation of the second training image, and noise information of a camera that captured the second training image.

8. The image conversion method as claimed in claim 1, wherein the machine learning model (110) comprises:
an encoder (112) trained to output at least one feature vector (114) from at least one image having an arbitrary domain style in response to receiving the at least one image as input; and
a decoder (116) trained to generate the second training image of the first domain style using a trained feature vector, and
the trained feature vector is a feature vector generated by the encoder (112) in response to receiving the first training image of the second domain style as input.

9. A non-transitory computer-readable recording medium storing computer-readable instructions which, when executed by at least one processor, cause the at least one processor to:
obtain a first image (120);
generate, using a machine learning model (110), a second image (130) by converting a domain style of at least a portion of the first image (120) into a first domain style; and
output the second image (130),
wherein the machine learning model (110) is trained to output a second training image of the first domain style associated with a first training image of a second domain style in response to receiving the first training image of the second domain style as input.

10. An electronic device (100) comprising:
a memory; and
at least one processor coupled to the memory and configured to execute computer-readable instructions stored in the memory,
wherein the at least one processor is configured to:
obtain a first image (120);
generate, using a machine learning model (110), a second image (130) by converting a domain style of at least a portion of the first image (120) into a first domain style; and
output the second image (130), and
the machine learning model (110) is trained to output a second training image of the first domain style associated with a first training image of a second domain style in response to receiving the first training image of the second domain style as input.

11. The electronic device as claimed in claim 10, wherein the first training image of the second domain style is an image obtained by blur-processing the second training image of the first domain style, and
the machine learning model (110) is one-shot trained using the blurred image of the second training image of the first domain style.

12. The electronic device as claimed in claim 10, wherein the obtained first image (120) is an image in which a background image and a foreground image are composited,
wherein the background image has the first domain style, and the foreground image has a domain style different from the first domain style and is included in at least the portion of the obtained first image (120), and
wherein the machine learning model (110) is trained using the background image as the second training image.

13. The electronic device as claimed in claim 10, wherein the obtained first image (120) is an image of a third domain style captured by a first camera, and
the second training image used to train the machine learning model (110) is an image of the first domain style captured by a second camera different from the first camera.

14. The electronic device as claimed in claim 10, wherein the first domain style is determined based on at least one of color information for at least one of hue, brightness, or saturation of the second training image, and noise information of a camera that captured the second training image.

15. The electronic device as claimed in claim 10, wherein the machine learning model (110) comprises:
an encoder (112) trained to output at least one feature vector (114) from at least one image having an arbitrary domain style in response to receiving the at least one image as input; and
a decoder (116) trained to generate the second training image of the first domain style using a trained feature vector, and
the trained feature vector is a feature vector generated by the encoder (112) in response to receiving the first training image of the second domain style as input.
